# EUROPÄISCHE PATENTSCHRIFT

(11) **EP 2 343 521 B1**
(45) Veröffentlichungstag und Bekanntmachung des Hinweises auf die Patenterteilung: **25.09.2019**
(21) Anmeldenummer: 10193353.9
(22) Anmeldetag: 01.12.2010
(51) Int. Cl.: G01G 19/42, G01G 15/00, G06M 7/00

(54) **Verfahren und Vorrichtung zur Erfassung von Gütern innerhalb einer Förderstrecke**
Method and device for detection of goods on a conveyor line
Procédé et dispositif de détection de marchandises à l'intérieur d'une trajectoire de transport

(30) Priorität: 08.01.2010 DE 102010000028
(43) Veröffentlichungstag der Anmeldung: 13.07.2011
(73) Patentinhaber: Krones AG, 93073 Neutraubling (DE)
(72) Erfinder: Dietersberger, Martin, 93073 Neutraubling (DE); Gabler, Markus, 93073 Neutraubling (DE)
(74) Vertreter: Benninger, Johannes

(56) Entgegenhaltungen:
- WO-A1-82/04123
- DE-A1- 4 031 349
- DE-A1- 19 805 143
- US-A- 4 425 974

## Beschreibung

Die Erfindung betrifft ein Verfahren zur Erfassung und Lagebestimmung und/oder zur Bestimmung der Anzahl von auf einer Fördervorrichtung befindlichen und/oder bewegten Gütern, die geordnet oder ungeordnet, hintereinander und/oder nebeneinander stehend oder liegend in Vielzahl und in horizontaler Richtung über eine Förderstrecke auf einer Förder- und Auflageebene transportiert und mittels einer Messvorrichtung zur Gewichtserfassung der Güter innerhalb eines definierten Wegabschnittes der Förderstrecke erfasst werden. Die Erfindung betrifft weiterhin eine entsprechende Fördervorrichtung für Güter.

Der Transport von Gütern und Artikeln auf Horizontalfördereinrichtungen erfordert in der Regel eine Reihe von Überwachungs- und Steuereinrichtungen. Sollen die Horizontalförderer neben ihrer reinen Förderfunktion auch zusätzliche Aufgaben wie bspw. eine Gruppierung und/oder Vereinzelung erfüllen können, ist es erforderlich, den Belegungsgrad mit Gütern oder Artikeln auf den Fördermitteln mit hinreichender Genauigkeit zu bestimmen. Für die Bestimmung und Überwachung des Belegungsgrades werden üblicherweise optische Sensoren wie Lichtschranken, Lichtgitter, Kamerasysteme mit nachgeschalteter Bildauswertung, Flächenscanner o. dgl. eingesetzt.

Für derartige optische Überwachungseinrichtungen sind jedoch in der Regel relativ komplexe Halterungen zum Anbau der Sensorik erforderlich, die zudem gegen mechanische Beeinträchtigungen und Beschädigungen geschützt werden müssen. Die Zugänglichkeit der Förderebenen kann unter Umständen durch die Anbauten für die optischen Überwachungseinrichtungen beeinträchtigt sein. Zudem sind optische Sensoren generell relativ verschmutzungsanfällig, was bei Abfüllumgebungen für Getränke nachteilig sein kann.

Aus diesem Grund sehen einige bekannte Fördereinrichtungen anstelle einer optischen Erfassung von Gütern und Artikeln die Erfassung der Gewichte dieser Güter vor.

So offenbart die DE 10 2006 061 571 A1 ein Verfahren und eine Vorrichtung zum Umsetzen von Stückgütern, welche in ihrem Gewicht voneinander abweichen, von einem Stückgutförderer in Ablagepositionen mindestens eines Ablagepositionsförderers, wobei das Gewicht während des Umsetzverfahrens ermittelt wird. Die Stückgüter werden auf dem Stückgutförderer entlang einer Pickerstraße mit zwei oder mehr in Förderrichtung der Stückgüter nacheinander angeordneten Pickern befördert. Die Picker greifen die Stückgüter und übergeben sie in Abhängigkeit von den erfassten Gewichten der einzelnen Stückgüter in eine der Ablagepositionen, wobei in Abhängigkeit von den erfassten Gewichten in den Ablagepositionen vordefinierte Gruppen mit definierten Gewichten gebildet werden.

Aus der DE 102 57 466 A1 ist ein Förderer für Güter wie Behälter für Gepäckstücke bekannt, der zwei oder mehr hintereinander geschaltete endlos umlaufende Förderbänder aufweist, wobei in Förderrichtung gesehen ein Förderband und ein Folgeband vorgesehen sind, die jeweils von einem Antriebsmotor mit lastmomentabhängiger Drehzahl angetrieben sind. Die Förderbänder sind derart in Förderrichtung hintereinander angeordnet, dass die vom Förderband beförderten Güter vom Folgeförderband übernommen werden, wobei das Gewicht der auf den Förderbändern liegenden Güter bestimmt und die Drehzahl des zum jeweiligen Förderband gehörenden Antriebsmotors in Abhängigkeit vom Gewicht der auf dem Förderband liegenden Güter gesteuert wird. Die beiden Förderer können einen Güterspeicher bilden und damit als Güterpuffer fungieren.

Aus der DE 60 2004 004 684 T2 ist schließlich eine Messfördereinrichtung bekannt, die eine Gewichtserfassungseinrichtung und eine Vielzahl von Bändern aufweist. Die Bänder sind in Breitenrichtung voneinander beabstandet und durch die Gewichtserfassungseinrichtung derart getragen, dass ein Gewicht eine Gegenstandes gemessen werden kann, während der Gegenstand auf den Transportoberflächen der Bänder transportiert wird. Diese Messfördereinrichtung soll es somit ermöglichen, das Gewicht eines Gegenstandes auf einem Förderer zu ermitteln.

Eine Gewichtserfassung kennt darüber hinaus die DE 198 05 143 A1. Hierzu ist in der DE-Patentanmeldung eine erste Wägestation zum Wiegen von Verpackungskartons vorgesehen. Der ersten Wägestation ist eine zweite Wägestation nachgeordnet. Befindet sich eine nicht vordefinierte Anzahl von Münzen in einer Münzrolle, so kann diese Abweichung mittels einer Wägestation erkannt werden und hierauf eine Aussonderung der jeweiligen Münzrolle mit inkorrekter Anzahl von Münzen erfolgen.

Auch aus der DE 40 31 349 A1 ist eine Gewichtserfassung von Münzrollen bekannt. Das Gewicht bzw. die Masse von Einzelrollen mit Münzen wird über eine Wägestation erfasst. Die Wägestation kann hierbei zwei Druckmessdosen aufweisen. Fehlverpackte Einzelrollen können nach Passieren der Wägestation von einer Verpackungsstraße entfernt werden. Die DE-Patentanmeldung zeigt jedoch keine Vorrichtung, mittels welcher eine Lagebestimmung der Münzen bzw. Münzrollen erfolgen könnte.

Weiterhin zeigt die US 4 425 974 A eine Vorrichtung zum Zählen von Druckbögen. Hierbei werden die zu zählenden Druckbögen auf einer Waage angeordnet. Die Waage verfügt über diverse Algorithmen zum Zählen der zu einem Gebinde zusammengefassten Druckbögen. Weiter kennt die US 4 425 974 A ein Verfahren zum kalibrieren und anpassen der Waage an die jeweiligen zu wiegenden Druckbögen. Eine Lagebestimmung der Druckbögen wird durch diese konstruktive Ausgestaltung nicht ermöglicht.

Aus der WO 82/04123 A1 ist zudem eine Vorrichtung zum Wiegen von Artikeln bekannt. Ein jeweiliger Artikel wird hierin über eine Ebene mit einer Vielzahl an Rollen bewegt. Zwei Sensoren erfassen während der Bewegung des jeweiligen Artikels entlang der Ebene jeweils eine Masse des Artikels. Sofern über die zwei Sensoren erfassten Werte zur Masse des jeweiligen Artikels zu einem bestimmten Zeitpunkt identisch sind, wird hierdurch erkannt, dass ein jeweiliger Artikel vollständig auf die Ebene mit ihrer Vielzahl an Rollen übergetreten ist. Sodann wird unter Berücksichtigung der identischen Werte der zwei Sensoren auf eine Masse des jeweiligen Artikels geschlossen.

Ein Ziel der Erfindung besteht darin, eine möglichst flexible und zuverlässig arbeitende Erfassung mit Lagebestimmung für wenigstens ein auf einer Fördereinrichtung befindliches Gut, vorzugsweise jedoch zwei oder mehr gleichzeitig auf einer Fördereinrichtung befindlicher und/oder bewegter Güter, zur Verfügung zu stellen. Ein weiteres Ziel der Erfindung besteht darin, unter Zuhilfenahme einer solchen Lagebestimmung eine effektive und produktschonende Pufferung bereitzustellen.

Die Ziele der Erfindung werden_mit den Gegenständen der unabhängigen Ansprüche erreicht. Merkmale vorteilhafter Weiterbildungen der Erfindung ergeben sich aus den abhängigen Ansprüchen. Zur Erreichung des Ziels sieht die Erfindung ein Verfahren zur Lagebestimmung und/oder zur Bestimmung der Anzahl von auf einer Fördervorrichtung befindlichen und/oder bewegten Gütern vor, die geordnet oder ungeordnet, hintereinander und/oder nebeneinander stehend oder liegend in Vielzahl und in horizontaler Richtung über eine Förderstrecke auf einer Förder- und Auflageebene transportiert und mittels einer Messvorrichtung zur Gewichtserfassung der Güter innerhalb eines definierten Wegabschnittes der Förderstrecke erfasst werden. Das Verfahren ist gemäß vorliegender Erfindung dadurch gekennzeichnet, dass die Messvorrichtung mittels einer Steuer- und Auswerteeinheit die Ausgangssignale mehrerer Gewichtssensoren auswertet, die an unterschiedlichen Positionen und jeweils entfernt voneinander im Bereich der Förderstrecke angeordnet sind. Zudem werden mittels der Steuer- und Auswerteeinheit aus den Ausgangssignalen der Gewichtssensoren eine Anzahl der aktuell auf der Förderstrecke befindlichen Güter und/oder deren Position innerhalb der Förderstrecke errechnet und bestimmt.

Das Verfahren kann insbesondere vorsehen, dass jeweils eine Summe der Massen der Förderstrecke und der darauf innerhalb des definierten Wegabschnittes befindlichen Güter erfasst werden. Hierzu können in einer besonders bevorzugten Variante des erfindungsgemäßen Verfahrens die Signale von mindestens vier Gewichtssensoren ausgewertet werden, von denen jeweils an beiden Längsseiten der Förderstrecke zwei Gewichtssensoren angeordnet sind, die an beiden Seiten jeweils in Anfangs- und Endbereichen des definierten Wegabschnitts der Förderstrecke angeordnet sind. Auf diese Weise befinden sich am Anfang und am Ende der Förderstrecke sowie auf deren beiden Längsseiten jeweils Gewichtssensoren, die eine Erfassung der auf der Förderstrecke befindlichen Gesamtmasse der Güter ermöglichen. Somit ermöglicht es diese Variante des Verfahrens, mittels der Steuer- und Auswerteeinheit aus den Ausgangssignalen der Gewichtssensoren die Anzahl jeweils gleichartiger und/oder gleich schwerer Güter jeweils bekannter Masse und/oder deren Anordnung auf der Förderstrecke zu berechnen.

Zusätzlich kann das Verfahren vorsehen, aus den im Zeitverlauf sich ändernden Ausgangssignalen der mindestens vier Gewichtssensoren eine Position der Güter und deren Bewegung auf der Förderstrecke herzuleiten.

Wahlweise kann die Förderstrecke eine einzige Spur umfassen. Sie kann jedoch auch zwei oder mehr hintereinander angeordnete, jeweils eng voneinander beabstandete Spuren jeweils gleicher Breite umfassen. Weiterhin kann die Förderstrecke als Pufferstrecke fungieren, bei der eine Vorschubgeschwindigkeit der beweglichen Förder- und Auflageebene von der Steuer- und Auswerteeinheit in Abhängigkeit von den erfassten Güterpositionen und/oder in Abhängigkeit von Förderparametern der Fördervorrichtung geregelt wird. Zudem können zwei oder mehr hintereinander angeordnete Förderstrecken derart gesteuert werden, dass jeweils mehrere Güter gruppiert oder vereinzelt werden.

Weiterhin sieht die Erfindung zur Erreichung des oben genannten Ziels eine Fördervorrichtung für Güter vor, die eine sich in horizontaler Richtung bewegende und die Güter über eine Förderstrecke transportierende Förder- und Auflageebene für eine Vielzahl von geordneten oder ungeordneten, hintereinander und/oder nebeneinander stehenden oder liegenden Gütern sowie eine Messvorrichtung zur Gewichtserfassung und/oder Erfassung der sich innerhalb eines definierten Wegabschnittes der Förderstrecke befindlichen Güter vor. Die Messvorrichtung umfasst mehrere Gewichtssensoren, die an unterschiedlichen Positionen und jeweils entfernt voneinander im Bereich der Förderstrecke angeordnet sind. Zudem umfasst die Messvorrichtung eine Steuer- und Auswerteeinheit zur Bestimmung einer Anzahl der aktuell auf der Förderstrecke befindlichen Güter und/oder deren Position innerhalb der Förderstrecke aus den Ausgangssignalen der Gewichtssensoren.

Eine bevorzugte Ausführungsvariante der erfindungsgemäßen Vorrichtung sieht vor, dass der Förderstrecke wenigstens vier Gewichtssensoren zugeordnet sind, von denen jeweils an beiden Längsseiten der Förderstrecke zwei Gewichtssensoren angeordnet sind, die an beiden Seiten jeweils in Anfangs- und Endbereichen des definierten Wegabschnitts der Förderstrecke angeordnet sind. Wahlweise kann die Förderstrecke zwei oder mehr aufeinander folgend angeordnete, eng voneinander beabstandete Spuren jeweils gleicher Breite umfassen. Es ist jedoch auch möglich, mit einer einspurigen Förderstrecke zu arbeiten.

Gemäß einer weiteren Ausführungsvariante der Fördervorrichtung ist die Förderstrecke als Pufferstrecke ausgebildet, bei der eine Vorschubgeschwindigkeit der beweglichen Förder- und Auflageebene von der Steuer- und Auswerteeinheit in Abhängigkeit von den erfassten Güterpositionen und/oder in Abhängigkeit von Förderparametern der Fördervorrichtung regelbar ist.

Die Gewichtssensoren können bspw. durch Kraftsensoren und/oder durch Dehnmessstreifen und/oder durch induktiv und/oder kapazitiv arbeitende Sensoren gebildet sein.

Die Erfindung ermöglicht es, beim Transport von Gütern mittels Fördertechnik den Belegungsgrad auf den Fördermitteln mit großer Genauigkeit zu bestimmen, ohne dass hierzu optische Erfassungseinrichtungen oder mechanische Abtaster oder dergleichen notwendig wären. Mittels der vorliegenden Erfindung wird das Gewicht des Fördermittels zusammen mit dem zu transportierenden Gut mit mehreren Kraftaufnehmern gemessen. Aufgrund der geometrischen Anordnung dieser Aufnehmer und der an den Aufnehmern anliegenden Gewichtskräfte kann ein Belegungsgrad abgeleitet werden. Da die Geometrie des Messsystems bekannt ist, kann aus den gemessenen Kräften an den einzelnen Aufnehmern auch die Position des einzelnen Förderguts bestimmt werden. Insbesondere ermöglicht es die Erfindung, die Gewichte und die Positionen mehrerer Güter auf einem Förderer zu bestimmen.

Ein weiterer Vorteil besteht durch die Möglichkeit, auf Grundlage dieser Auswertungen die Geschwindigkeiten mehrerer hintereinander geschalteter Förderbänder zu regeln und somit die Güter variabel entweder aufzugruppieren oder zu vereinzeln. So kann ein Transporteur aus zwei oder mehr, unabhängig voneinander in ihren Fördergeschwindigkeiten steuerbaren Spuren bestehen. Am Anfang und Ende jeder Transportstrecke befindet sich je links und rechts eine Gewichtsmesseinrichtung. Mehrere dieser Transporteure bilden eine Speicherstrecke. Sollen Güter oder Gebinde kontrolliert eingespeichert und ebenso kontrolliert auch wieder vereinzelt werden können, so dass die Pufferstrecke möglichst effektiv genutzt und eine dauerhaft zuverlässig arbeitende Regelung realisiert werden kann, ist es notwendig genau zu erfassen oder zu berechnen, an welcher Stelle zu bestimmten Zeitpunkten sich welche Gebindeanzahlen auf den jeweiligen Transportabschnitten befinden. Um dies zu erreichen, werden die Ausgangssignale der vier Gewichtsaufnehmer zunächst aufsummiert, um daraus die gesamte Anzahl der Pakete auf den Spuren bestimmen zu können. Wird zudem der Unterschied der Summe der Messwerte der linken und der rechten Sensoren betrachtet, so kann daraus die Mengenverteilung der Gebinde von der linken zu rechten Spur abgeleitet werden. Werden schließlich die Unterschiede der Summen der vorderen zu den hinteren Sensorsignalen berücksichtigt, so kann daraus die Verteilung der Gebinde in Laufrichtung abgeleitet werden. Durch zusätzliche Auswertung der Veränderungen der Sensorwerte über die Zeit kann eine Information über die genaue Anzahl und Position und Verteilung der Gebinde auf der Transportstrecke gewonnen werden. Mit diesen Informationen kann eine Recheneinheit die einzelnen Pufferstrecken durch gezieltes Ein- und Ausschalten bzw. durch Beschleunigen und Verzögern der Förderstrecke optimal ansteuern und ermöglicht somit eine effektive und produktschonende Pufferung. Besonders vorteilhaft bei dieser Art der Pufferung ist die sehr schnelle Reaktionsmöglichkeit. Im Vergleich zu bekannten Stauförderern, die unter den Gebinden "durchlaufen", kann die erfindungsgemäße Pufferstrecke sofort bei Belegung abgeschaltet werden, was den Verschleiß und den Energiebedarf reduziert, da die Antriebe abgeschaltet werden können.

Von Vorteil ist es, dass die erforderliche Sensorik in einer bestehenden Grundrahmenkonstruktion untergebracht werden kann, wodurch sie effektiv gegen mechanische Beschädigung oder Zerstörung geschützt werden kann. Auch sind keine kompexen Halterungen zum Anbau der Sensorik notwendig. Die verwendete Sensorik ist zudem unempfindlich gegen Verschmutzung. Außerdem sind die eingesetzten Kraftaufnehmer wartungs- und verschleißfrei, generell unabhängig von äußeren Einflüssen und unabhängig von produktspezifischen Merkmalen. Weiterhin ist von Vorteil, dass durch den Entfall der optischen Sensorik und der damit verbundenen Anbauten am Führungsgeländer die zuvor bestehende eingeschränkte Zugänglichkeit entfällt.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügte Zeichnung Bezug nimmt.
Fig. 1 zeigt eine schematische Perspektivdarstellung einer Fördereinrichtung mit zwei aufeinander folgenden Förderbereichen.
Fig. 2 zeigt ein schematisches Blockschaltbild einer Verschaltung einer Erfassungseinrichtung zur Erfassung der mit der Fördereinrichtung gemäß Fig. 1 in horizontaler Richtung beförderten Güter.

Für gleiche oder gleich wirkende Elemente der Erfindung werden identische Bezugszeichen verwendet. Ferner werden der Übersicht halber teilweise nur Bezugszeichen in den einzelnen Figuren dargestellt, die für die Beschreibung der jeweiligen Figur erforderlich sind. Die dargestellten Ausführungsformen stellen lediglich Beispiele dar. Darüber hinaus ist eine Vielzahl von Varianten und Abwandlungen denkbar, die von dem erfindungsgemäßen Gedanken Gebrauch machen und deshalb ebenfalls in den Schutzbereich fallen.

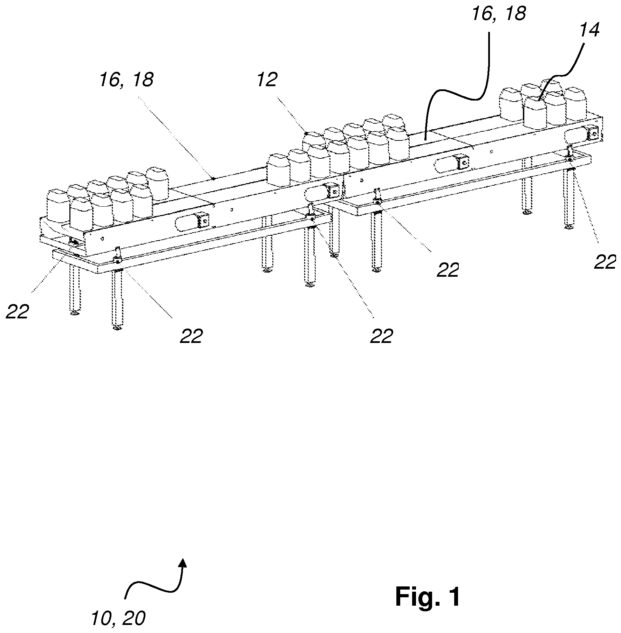

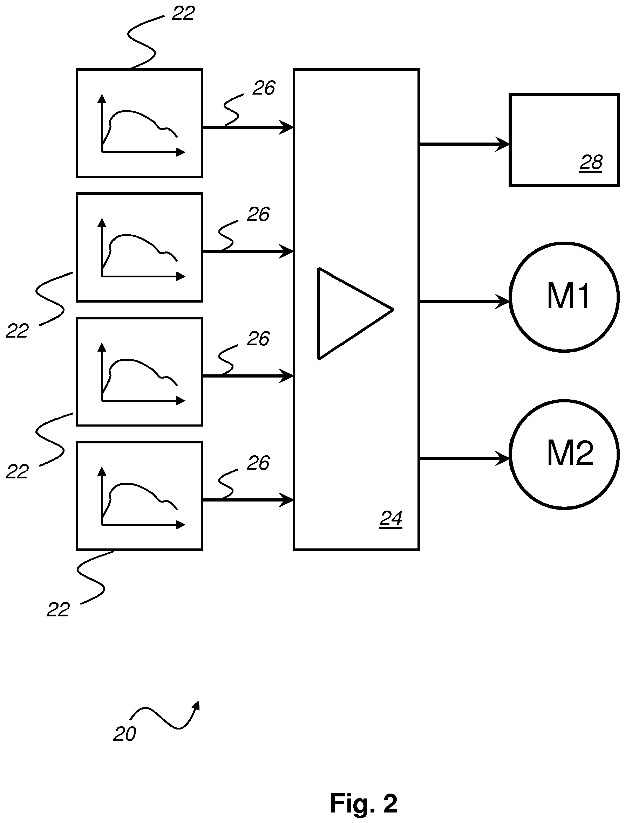

Das nachfolgend illustrierte Ausführungsbeispiel zeigt in Fig. 1 eine Fördervorrichtung 10 für Güter 12 wie bspw. Getränkebehälter 14. Die Fördervorrichtung 10 umfasst mehrere, sich in horizontaler Richtung bewegende und die Güter 12 bzw. Getränkebehälter 14 über jeweilige Förderstrecken 16 transportierende Förder- und Auflageebenen 18 für eine Vielzahl von geordneten oder ungeordneten, hintereinander und/oder nebeneinander stehenden oder liegenden Gütern 12. Weiterhin ist eine Messvorrichtung 20 vorgesehen, die einer Erfassung der sich innerhalb eines definierten Wegabschnittes der Förderstrecke 16 befindlichen Güter 12 dient. Die Messvorrichtung 20 umfasst mehrere Gewichtssensoren 22, die an unterschiedlichen Positionen und jeweils entfernt voneinander im Bereich der Förderstrecke 16 angeordnet sind. Zudem umfasst die Messvorrichtung 20 eine Steuer- und Auswerteeinheit 24 (vgl. Fig. 2) zur Bestimmung einer Anzahl der aktuell auf der Förderstrecke 16 befindlichen Güter 12 sowie deren Position innerhalb der Förderstrecke 16 aus den Ausgangssignalen 26 der Gewichtssensoren 22.

Wie in der Ausführungsvariante gemäß Fig. 1 verdeutlicht ist, sind jedem Abschnitt der Förderstrecke 16 jeweils vier Gewichtssensoren 22, von denen jeweils an beiden Längsseiten der Förderstrecke 16 zwei Gewichtssensoren 22 angeordnet sind, die an beiden Seiten jeweils in Anfangs- und Endbereichen des definierten Wegabschnitts der Förderstrecke 16 angeordnet sind. Durch die Möglichkeit der Auswertung der Ausgangssignale 26 der Gewichtssensoren 22 und deren Veränderung über die Zeit ist es möglich, die auf der Förderstrecke 16 bewegten Güter 12 bzw. Getränkebehälter 14 sowohl in ihrer Zahl als auch in ihrer Position zu erfassen. Somit kann die Förderstrecke 16 als Pufferstrecke dienen, bei der eine Vorschubgeschwindigkeit der beweglichen Förder- und Auflageebene 18 von der Steuer- und Auswerteeinheit 24 in Abhängigkeit von den erfassten Güterpositionen und/oder in Abhängigkeit von Förderparametern der Fördervorrichtung 10 geregelt werden kann.

Die Gewichtssensoren 22 können bspw. durch Kraftsensoren, durch Dehnmessstreifen, durch induktiv und/oder kapazitiv arbeitende Sensoren gebildet sein. Normalerweise kommen jedoch Kraftsensoren zum Einsatz, die hinreichend genaue Werte zur Steuerung der Fördervorrichtung 10 liefern und die sich zudem relativ leicht in vorhandene Anlagenkonfigurationen einfügen lassen.

Das schematische Blockschaltbild der Fig. 2 verdeutlicht beispielhaft eine Verschaltung einer Erfassungs- bzw. Messvorrichtung 20 zur Erfassung der mit der Fördervorrichtung 10 gemäß Fig. 1 in horizontaler Richtung beförderten Güter 12. Die vier Gewichtssensoren 22 liefern jeweils ihre Ausgangssignale 26 an die Steuer- und Auswerteeinheit 24, welche die Signale 26 auswertet und daraus die Anzahl der aktuell auf der Förderstrecke 16 befindlichen Güter 12 und/oder deren Position innerhalb der Förderstrecke 16 errechnet und bestimmt. Zusätzlich kann aus den im Zeitverlauf sich ändernden Ausgangssignalen 26 der mindestens vier Gewichtssensoren 22 eine Position der Güter 12 und deren Bewegung auf der Förderstrecke 16 errechnet werden.

Wahlweise kann die Förderstrecke 16 eine einzige Spur umfassen. Sie kann jedoch auch zwei oder mehr aufeinander folgende, eng voneinander beabstandete Spuren jeweils gleicher Breite umfassen. Jede dieser Spuren weist normalerweise einen Antriebsmotor M1, M2 etc. auf. Auf diese Weise kann die Förderstrecke 16 als Pufferstrecke genutzt werden, bei der eine Vorschubgeschwindigkeit der beweglichen Förder- und Auflageebene 18 von der Steuer- und Auswerteeinheit 24 in Abhängigkeit von den erfassten Güterpositionen und/oder in Abhängigkeit von Förderparametern der Fördervorrichtung 10 geregelt wird. Zudem können zwei oder mehr hintereinander angeordnete Förderstrecken 16 derart gesteuert werden, dass jeweils mehrere Güter 12 gruppiert oder vereinzelt werden.

Mehrere dieser Förderebenen 18 bilden eine sog. Speicherstrecke. Sollen Güter 12 oder Gebinde kontrolliert eingespeichert und ebenso kontrolliert auch wieder vereinzelt werden können, so dass die Pufferstrecke möglichst effektiv genutzt und eine dauerhaft zuverlässig arbeitende Regelung realisiert werden kann, ist es notwendig genau zu erfassen oder zu berechnen, an welcher Stelle zu bestimmten Zeitpunkten sich welche Gebindeanzahlen auf den jeweiligen Transportabschnitten befinden. Um dies zu erreichen, werden die Ausgangssignale 26 der vier Gewichtsaufnehmer 22 zunächst aufsummiert, um daraus die gesamte Anzahl der Güter 12 oder Pakete o. dgl. auf den Spuren 18 bestimmen zu können. Wird zudem der Unterschied der Summe der Messwerte 26 der linken und der rechten Sensoren 22 betrachtet, so kann daraus die Mengenverteilung der Gebinde bzw. Güter 12 von der linken zu rechten Spur abgeleitet werden. Werden schließlich die Unterschiede der Summen der vorderen zu den hinteren Sensorsignalen 26 berücksichtigt, so kann daraus die Verteilung der Gebinde oder Güter 12 in Laufrichtung abgeleitet werden. Durch zusätzliche Auswertung der Veränderungen der Sensorwerte 26 über die Zeit kann eine Information über die genaue Anzahl und Position und Verteilung der Gebinde oder Güter 12 auf der Transportstrecke 16 gewonnen werden. Mit diesen Informationen kann die Recheneinheit 24 die einzelnen Pufferstrecken durch gezieltes Ein- und Ausschalten bzw. durch Beschleunigen und Verzögern der Antriebe M1, M2 etc. und damit der Förderstrecke 16 optimal ansteuern und ermöglicht somit eine effektive und produktschonende Pufferung.

Dass die Steuer- und Auswerteeinheit 24 weitere Eingangssignale (hier nicht dargestellt) berücksichtigen wie auch weitere Steuerparameter zur Aktivierung weiterer Aktoren 28 ausgeben kann, ist in der Darstellung der Fig. 2 lediglich durch den allgemeinen Aktor 28 angedeutet. Dieser Aktor 28 kann bspw. ein Teil einer angrenzenden Einheit wie bspw. eines Verpackungsaggregats o. dgl. sein.

### Verwendete Bezugszeichen:

- 10: Fördervorrichtung
- 12: Güter
- 14: Getränkebehälter
- 16: Förderstrecke
- 18: Förderebene
- 20: Messvorrichtung
- 22: Gewichtssensor
- 24: Steuer- und Auswerteeinheit
- 26: Ausgangssignal
- 28: Aktor

- M1: erster Antrieb
- M2: zweiter Antrieb

## Patentansprüche

1. Verfahren zur Lagebestimmung von auf einer Fördervorrichtung (10) befindlichen und/oder bewegten Gütern (12), die geordnet oder ungeordnet, hintereinander und/oder nebeneinander stehend oder liegend in Vielzahl und in horizontaler Richtung über eine Förderstrecke (16) auf einer Förder- und Auflageebene (18) transportiert und mittels einer Messvorrichtung (20) zur Gewichtserfassung der Güter (12) innerhalb eines definierten Wegabschnittes der Förderstrecke (16) erfasst werden, wobei die Messvorrichtung (20) mittels einer Steuer- und Auswerteeinheit (24) die sich über einen Zeitverlauf ändernden_Ausgangssignale (26) mehrerer Gewichtssensoren (22) auswertet, die an unterschiedlichen Positionen und jeweils entfernt voneinander im Bereich der Förderstrecke (16) angeordnet sind, wobei die Steuer- und Auswerteeinheit (24) aus den sich über den Zeitverlauf ändernden Ausgangssignalen (26) der Gewichtssensoren (22) eine Position der Güter (12) innerhalb der Förderstrecke (16) errechnet und bestimmt, **dadurch gekennzeichnet, dass** die Förderstrecke (16) als Pufferstrecke fungiert, bei der eine Vorschubgeschwindigkeit der beweglichen Förder- und Auflageebene (18) von der Steuer- und Auswerteeinheit (24) in Abhängigkeit von den erfassten Güterpositionen reguliert wird.

2. Verfahren nach Anspruch 1, bei dem jeweils eine Summe der Massen der Förderstrecke (16) und der darauf innerhalb des definierten Wegabschnittes befindlichen Güter (12) erfasst werden.

3. Verfahren nach Anspruch 1 oder 2, bei dem die Ausgangssignale (26) von mindestens vier Gewichtssensoren (22) ausgewertet werden, von denen jeweils an beiden Längsseiten der Förderstrecke (16) zwei Gewichtssensoren (22) angeordnet sind, die an beiden Seiten jeweils in Anfangs- und Endbereichen des definierten Wegabschnitts der Förderstrecke (16) angeordnet sind.

4. Verfahren nach einem der Ansprüche 1 bis 3, bei dem mittels der Steuer- und Auswerteeinheit (24) aus den Ausgangssignalen (26) der Gewichtssensoren (22) die Anzahl jeweils gleichartiger und/oder gleich schwerer Güter (12) jeweils bekannter Masse und/oder deren Anordnung auf der Förderstrecke (16) berechnet werden.

5. Verfahren nach einem der Ansprüche 1 bis 4, bei dem die Förderstrecke (16) zwei oder mehr hintereinander angeordnete, eng voneinander beabstandete Spuren jeweils gleicher Breite umfasst.

6. Verfahren nach einem der Ansprüche 1 bis 5, bei dem zwei oder mehr hintereinander angeordnete Förderstrecken (16) derart gesteuert werden, dass jeweils mehrere Güter (12) gruppiert oder vereinzelt werden.

7. Fördervorrichtung (10) für Güter (12), mit einer sich in horizontaler Richtung bewegenden und die Güter (12) über eine Förderstrecke (16) transportierende Förder- und Auflageebene (18) für eine Vielzahl von geordneten oder ungeordneten, hintereinander und/oder nebeneinander stehenden oder liegenden Gütern (12), und mit einer Messvorrichtung (20) zur Gewichtserfassung und/oder Erfassung der sich innerhalb eines definierten Wegabschnittes der Förderstrecke (16) befindlichen Güter (12), wobei die Messvorrichtung (20) mehrere Gewichtssensoren (22) umfasst, die an unterschiedlichen Positionen und jeweils entfernt voneinander im Bereich der Förderstrecke (16) angeordnet sind, und dass die Messvorrichtung (20) eine Steuer- und Auswerteeinheit (24) zur Bestimmung der Position von Gütern (12) innerhalb der Förderstrecke (16) aus den sich über einen Zeitverlauf ändernden Ausgangssignalen (26) der Gewichtssensoren (22) umfasst, **dadurch gekennzeichnet, dass** die Förderstrecke (16) als Pufferstrecke ausgebildet ist, bei der eine Vorschubgeschwindigkeit der beweglichen Förder- und Auflageebene (18) von der Steuer- und Auswerteeinheit (24) in Abhängigkeit von den erfassten Güterpositionen der Fördervorrichtung (10) regelbar ist.

8. Vorrichtung nach Anspruch 7, bei welcher der Förderstrecke (16) wenigstens vier Gewichtssensoren (22) zugeordnet sind, von denen jeweils an beiden Längsseiten der Förderstrecke (16) zwei Gewichtssensoren (22) angeordnet sind, die an beiden Seiten jeweils in Anfangs- und Endbereichen des definierten Wegabschnitts der Förderstrecke (16) angeordnet sind.

9. Vorrichtung nach Anspruch 7 oder 8, bei der die Förderstrecke (16) zwei oder mehr hintereinander angeordnete, eng voneinander beabstandete Spuren jeweils gleicher Breite umfasst.

10. Vorrichtung nach einem der Ansprüche 7 bis 9, bei der die Gewichtssensoren (22) durch Kraftsensoren und/oder durch Dehnmessstreifen und/oder durch induktiv und/oder kapazitiv arbeitende Sensoren gebildet sind.

## Claims

1. A method used to determine the position of goods (12) located on and/or being moved on a conveyor device (10), which goods (12) are being transported in an ordered or unordered manner, standing or lying one after another and/or next to each other, in a multitude, and in horizontal direction via a conveyor line (16) on a conveying and support surface (18), and which goods (12) are detected within a defined path section of the conveyor line (16) by means of a measuring apparatus (20) for weight detection of the goods (12), wherein the measuring apparatus (20) evaluates by means of a control and evaluation unit (24) the output signals (26), which change over a course of time, of a plurality of weight sensors (22) arranged in the range of the conveyor line (16) in different positions and in each instance spaced apart from each other, wherein the control and evaluation unit (24) calculates and determines from the weight sensors' (22) output signals (26), which change over the course of time, a position of the goods (12) within the conveyor line (16), **characterised in that** the conveyor line (16) serves as buffer line, where a feed speed of the movable conveying and support surface (18) is regulated by the control and evaluation unit (24) based on the detected positions of the goods.

2. The method according to claim 1, in which in each instance a sum of the masses of the conveyor line (16) and of the goods (12) located thereon within the defined path section are detected.

3. The method according to claim 1 or 2, in which the output signals (26) from at least four weight sensors (22) are evaluated, with two weight sensors (22) being arranged in each instance on both longitudinal sides of the conveyor line (16), with the weight sensors (22) being arranged on both sides in each instance in beginning sections and end sections of the defined path section of the conveyor line (16).

4. The method according to one of the claims 1 to 3, in which the number of the goods (12) and/or the arrangement of the goods (12) on the conveyor line (16), which goods (12) are in each instance of the same type and/or of the same weight, in each instance of known mass, are calculated by means of the control and evaluation unit (24) from the weight sensors' (22) output signals (26).

5. The method according to one of the claims 1 to 4, in which the conveyor line (16) comprises two or more lanes, each of the same width, arranged one after another, closely spaced apart from each other.

6. The method according to one of the claims 1 to 5, in which two or more conveyor lines (16) arranged one after another are controlled in such a manner that in each instance a plurality of goods (12) is grouped or singularised.

7. A conveyor device (10) for goods (12), with a conveying and support surface (18) for a multitude of goods (12) that are ordered or unordered, standing or lying one after another and/or next to each other, which conveying and support surface (18) moves in horizontal direction and transports the goods (12) via a conveyor line (16); and with a measuring apparatus (20) for the weight detection and/or detection of goods (12) located within a defined path section of the conveyor line (16), wherein the measuring apparatus (20) comprises a plurality of weight sensors (22), which are arranged in the range of the conveyor line (16) in different positions and in each instance spaced apart from each other, and in that the measuring apparatus (20) comprises a control and evaluation unit (24) used to determine the position of goods (12) within the conveyor line (16) from the output signals (26) of the weight sensors (22), which output signals (26) change over a course of time, **characterised in that** the conveyor line (16) is designed as buffer line, where a feed speed of the movable conveying and support surface (18) is regulatable by the control and evaluation unit (24) based on the detected positions of the goods of the conveyor device (10).

8. The apparatus according to claim 7, in which at least four weight sensors (22) are assigned to the conveyor line (16), with two weight sensors (22) being arranged in each instance on both longitudinal sides of the conveyor line (16), with the weight sensors (22) being arranged on both sides in each instance in beginning sections and end sections of the defined path section of the conveyor line (16).

9. The apparatus according to claim 7 or 8, in which the conveyor line (16) comprises two or more lanes, each of the same width, arranged one after another, closely spaced apart from each other.

10. The apparatus according to one of the claims 7 to 9, in which the weight sensors (22) are formed by force sensors and/or by strain gauges and/or by sensors operating in an inductive and/or capacitive manner.

## Revendications

1. Procédé de détermination de la position de marchandises (12) qui se trouvent et/ou sont déplacées sur un dispositif de transport (10) et qui sont transportées de manière ordonnée ou en désordre, debout ou de manière couchée les unes derrière les autres et/ou les unes à côté des autres, en une pluralité et dans le sens horizontal sur un trajet de transport (16) sur un plan de transport et d'appui (18) et sont saisies au moyen d'un dispositif de mesure (20) destiné à détecter le poids des marchandises (12) à l'intérieur d'une section de chemin définie du trajet de transport (16), dans lequel le dispositif de mesure (20) évalue, au moyen d'une unité de commande et d'évaluation (24), les signaux de sortie (26) variant au cours du temps de plusieurs capteurs de poids (22) qui sont disposés sur des positions différentes et respectivement à distance les uns des autres au niveau du trajet de transport (16), dans lequel ladite unité de commande et d'évaluation (24) calcule et détermine une position des marchandises (12) à l'intérieur du trajet de transport (16) à partir des signaux de sortie (26) variant au cours du temps des capteurs de poids (22), **caractérisé par le fait que** le trajet de transport (16) fait fonction de trajet tampon dans lequel une vitesse d'avance du plan de transport et d'appui (18) déplaçable est réglée par l'unité de commande et d'évaluation (24) en fonction des positions détectées des marchandises.

2. Procédé selon la revendication 1, dans lequel respectivement une somme des masses du trajet de transport (16) et des marchandises (12) situées sur celui-ci à l'intérieur de la section de chemin définie est détectée.

3. Procédé selon la revendication 1 ou 2, dans lequel on évalue les signaux de sortie (26) d'au moins quatre capteurs de poids (22) dont deux capteurs de poids (22) sont disposés respectivement sur les deux côtés longitudinaux du trajet de transport (16), et qui sont disposés de part et d'autre respectivement dans des zones de début et de fin de la section de chemin définie du trajet de transport (16).

4. Procédé selon l'une quelconque des revendications 1 à 3, dans lequel le nombre de marchandises (12) respectivement similaires et/ou de même poids et ayant chacune une masse connue et/ou leur disposition sur le trajet de transport (16) sont calculés au moyen de l'unité de commande et d'évaluation (24) à partir des signaux de sortie (26) des capteurs de poids (22).

5. Procédé selon l'une quelconque des revendications 1 à 4, dans lequel le trajet de transport (16) comprend deux ou plusieurs pistes qui sont disposées les unes derrière les autres et étroitement espacées et présentent chacune la même largeur.

6. Procédé selon l'une quelconque des revendications 1 à 5, dans lequel deux ou plusieurs trajets de transport (16) disposés les uns derrière les autres sont commandés de telle sorte que respectivement plusieurs marchandises (12) sont regroupées ou individualisées.

7. Dispositif de transport (10) pour marchandises (12) comprenant un plan de transport et d'appui (18) pour une pluralité de marchandises (12) ordonnées ou en désordre, situées debout ou de manière couchée les unes derrière les autres et/ou les unes à côté des autres, qui se déplace dans le sens horizontal et transporte les marchandises (12) sur un trajet de transport (16), ainsi qu'un dispositif de mesure (20) destiné à détecter le poids des et/ou à détecter les marchandises (12) se trouvant à l'intérieur d'une section de chemin définie du trajet de transport (16), dans lequel le dispositif de mesure (20) comprend une pluralité de capteurs de poids (22) qui sont disposés sur des positions différentes et respectivement à distance les uns des autres au niveau du trajet de transport (16), et dans lequel le dispositif de mesure (20) comprend une unité de commande et d'évaluation (24) destinée à déterminer la position de marchandises (12) à l'intérieur du trajet de transport (16) à partir des signaux de sortie (26) variant au cours du temps des capteurs de poids (22), **caractérisé par le fait que** le trajet de transport (16) est conçu en tant que trajet tampon dans lequel une vitesse d'avance du plan de transport et d'appui (18) déplaçable est réglable par l'unité de commande et d'évaluation (24) en fonction des positions détectées des marchandises du dispositif de transport (10).

8. Dispositif selon la revendication 7, dans lequel au moins quatre capteurs de poids (22) sont associés au trajet de transport (16), dont deux capteurs de poids (22) sont disposés respectivement sur les deux côtés longitudinaux du trajet de transport (16), et qui sont disposés de part et d'autre respectivement dans des zones de début et de fin de la section de chemin définie du trajet de transport (16).

9. Dispositif selon la revendication 7 ou 8, dans lequel le trajet de transport (16) comprend deux ou plusieurs pistes qui sont disposées les unes derrière les autres et étroitement espacées et présentent chacune la même largeur.

10. Dispositif selon l'une quelconque des revendications 7 à 9, dans lequel les capteurs de poids (22) sont constitués par des capteurs de force et/ou par des jauges de contrainte et/ou par des capteurs à fonctionnement inductif et/ou capacitif.
